# EUROPEAN PATENT APPLICATION

(11) **EP 4 656 539 A1**
(43) Date of publication of application: **03.12.2025**
(21) Application number: 25178245.4
(22) Date of filing: 22.05.2025
(51) Int. Cl.: B65B 59/00, B65B 65/02, B65B 9/20, B65B 61/24, B65B 35/24, B65G 17/32, B65G 47/86

(54) **FOLDING APPARATUS, PACKAGING MACHINE HAVING A FOLDING APPARATUS AND METHOD FOR FORMING FINALIZED PACKAGES FROM SEMI-FINALIZED PACKS**

(30) Priority: 27.05.2024 IT 202400011941
(71) Applicant: Tetra Laval Holdings & Finance S.A., 1009 Pully (CH)
(72) Inventor: CATELLANI, Andrea, 41123 Modena (IT); MATTIOLI, Giorgio, 41123 Modena (IT); MAMELI, Alberto, 41123 Modena (IT); LOG, Audun Reinsborg, 41123 Modena (IT); RIMONDI, Fabrizio, 41123 Modena (IT); CEFALONI, Andrea, 41123 Modena (IT)
(74) Representative: Tetra Pak Patent Attorneys

(57) **Abstract**

There is described a folding apparatus (16) comprising a plurality of retaining pockets (30), a conveying device (31) configured to advance the retaining pockets (30) along an endless path (R) and through a receiving station (32) and a release station (33). Each retaining pocket (30) comprises a first plate (40) and a second plate (41) delimiting a retaining space (42) between one another. At least one of the respective first plate (40) and the respective second plate (41) of each retaining pocket (30) is movable so as to modify a distance between the respective first plate (40) and the respective second plate (41) of the respective retaining pocket (30).

## Description

### TECHNICAL FIELD

The present invention relates to a folding apparatus for forming finalized packages of a pourable product from semi-finalized packs of the pourable product.

Advantageously, the present invention also relates to a packaging machine for packaging a pourable product, preferentially a pourable food product, into finalized packages and having a folding apparatus for folding semi-finalized packs into the finalized packages.

Moreover, the present invention also relates to a method for forming finalized packages of a pourable product from semi-finalized packs of the pourable product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for pourable food products known as Tetra Brik Aseptic (registered trademark), which is made by sealing and folding a laminated packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material and is in turn covered with another layer of heat-seal plastic material forming the inner face of the package eventually contacting the food product.

Packages of this sort are normally produced on fully automatic packaging machines.

There are known packaging machines that advance a web of packaging material through a sterilization apparatus for sterilizing the web of packaging material and into an isolation chamber in which the sterilized web of packaging material is maintained and advanced. During advancement of the web of packaging material within the isolation chamber, the web of packaging material is folded and sealed longitudinally to form a tube, the tube being further fed along an (vertical) advancing direction. In order to complete the forming operations, the tube is filled with a pourable product, in particular a pourable food product, and is transversally sealed and subsequently cut along equally spaced transversal cross sections during advancement along the advancing direction. Pillow packs are so obtained. These pillow packs define sealed semi-finalized packs having each a central main body, two sealing fins resulting from transversally sealing and cutting the tube and protruding from the respective central main body and a plurality of flaps laterally protruding from the central main body. In order to obtain the finalized packages, the pillow packs are further formed and the sealing fins and the flaps are folded and sealed onto the respective central main bodies.

A typical packaging machine of this type comprises:
- a forming apparatus configured to form the semi-finalized packs being filled with the pourable product; and
- a folding apparatus configured to receive the semi-finalized packs from the forming apparatus and to form the finalized packages from the semi-finalized packs.

There is known a type of folding apparatus that comprises a plurality of retaining pockets configured to retain the semi-finalized packs and a conveying device configured to advance the retaining pockets along an endless path and through a receiving station, at which the semi-finalized packs are fed into the retaining pockets, and a release station, at which the finalized packages are released. The retaining pockets are defined by plates, which are advanced along the endless path.

The endless path comprises an operative portion extending between the receiving station and the release station and having a linear shape.

The folding apparatus also comprises a flap folding device configured to partially fold the flaps and the sealing fins towards the respective central main bodies and a bonding device configured to bond the flaps onto the respective central main bodies. The flap folding device and the bonding device are displaced from one another along the operative portion such that the flap folding devices and the bonding device manipulate the semi-finalized packs while they advance along the operative portion.

The endless path also comprises a return portion having two curved sections and one linear section (interposed between the two curved sections) extending between the release station and the receiving station.

Even though the known folding apparatuses work satisfyingly well, a need is felt in the sector to further improve the known folding apparatuses.

### DISCLOSURE OF INVENTION

It is therefore an object of the present invention to provide an improved folding apparatus.

It is a further object of the present invention to provide an improved packaging machine.

It is an even further object of the present invention to provide an improved package forming method.

According to the present invention, there are provided a folding apparatus and a package forming method according to the respective independent claims.

Preferred embodiments are claimed in the dependent claims.

According to the present invention, there is also provided a packaging machine according to claim 15.

### BRIEF DESCRIPTION OF THE DRAWINGS

A non-limiting embodiment of the present invention will be described by way of example with reference to the accompanying drawings, in which:
Figure 1 is a schematic view of a packaging machine having a folding apparatus according to the present invention, with parts removed for clarity;
Figure 2 is a schematic representation of the transformation of a semi-finalized pack into a finalized package, with parts removed for clarity;
Figure 3 is a lateral view of a detail of the folding apparatus of Figure 1, with parts removed for clarity;
Figure 4 is a perspective view of a portion of the detail of Figure 3, with parts removed for clarity;
Figure 5 is another perspective view of the portion of the detail of Figure 3, with parts removed for clarity; and
Figures 6, 7a and 7b are perspective views of further portions of the detail of Figure 3, with parts removed for clarity.

### BEST MODES FOR CARRYING OUT THE INVENTION

Number 1 indicates as a whole a packaging machine for producing finalized packages 2, preferentially sealed finalized packages 2, of a pourable product, preferentially a pourable food product such as pasteurized milk, fruit juice, wine, tomato sauce, yoghurt, milk drinks, yoghurt drinks, emulsions, beverages with pulp, salt, sugar and the like.

Preferentially, finalized packages 2 are formed from a multilayer packaging material. Even more preferentially, finalized packages 2 may be formed from a web of packaging material 3.

More specifically, the multilayer packaging material, preferentially web of packaging material 3, may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material may define the respective inner face of finalized packages 2 eventually contacting the pourable product.

According to some possible non-limiting embodiments, the multilayer packaging material, preferentially web of packaging material 3, may also comprise a layer of gas- and light-barrier material, e.g. aluminum foil or ethylene vinyl alcohol (EVOH) film, preferentially being arranged between one of the layers of the heat-seal plastic material and the layer of fibrous material. Preferentially, the multilayer packaging material, preferentially web of packaging material 3, may also comprise a further layer of heat-seal plastic material being interposed between the layer of gas- and light-barrier material and the layer of fibrous material.

In more detail, each finalized package 2 may extend along a longitudinal axis, and preferentially may have a longitudinal seam portion (extending along the respective longitudinal axis) and a pair of transversal sealing fins, preferentially a transversal top sealing fin and a transversal bottom sealing fin.

Preferentially, each finalized package 2 may have a substantially parallelepiped structure.

Furthermore, each finalized package 2 may comprise at least a first end portion and a second end portion arranged at opposite sides of finalized package 2 and an intermediate portion interposed between the first end portion and the second end portion. Preferentially, each first end portion may define a bottom of the respective finalized package 2 and each second end portion may define a top of the respective finalized package 2.

In further detail, each first end portion and each second end portion may comprise at least one respective transversal wall (being transversal to the respective longitudinal axis of the respective finalized package 2).

Preferentially, each intermediate portion may comprise and/or define a side wall, e.g. formed from a plurality of interconnected side wall portions, extending between the respective transversal walls.

More specifically, the respective transversal wall of each first end portion may define a bottom wall and the respective transversal wall of each second end portion may define a top wall. Preferentially, the bottom wall may have a support surface adapted to be placed on a (horizontal) plane, such as e.g. a shelf within a distribution point, and the top wall may be opposite to the bottom wall.

According to some possible non-limiting embodiments, each finalized package 2 may also comprise an opening device, such as a closure or a lid.

According to some possible non-limiting embodiments, each opening device may be applied to the respective multilayer packaging material, preferentially web of packaging material 3, or onto semi-finalized packs 5 (which will be described in more detail in the following) or onto finalized packages 2.

Preferentially, each opening device may be provided on the respective second end portion, preferentially the respective transversal wall defining the respective top wall.

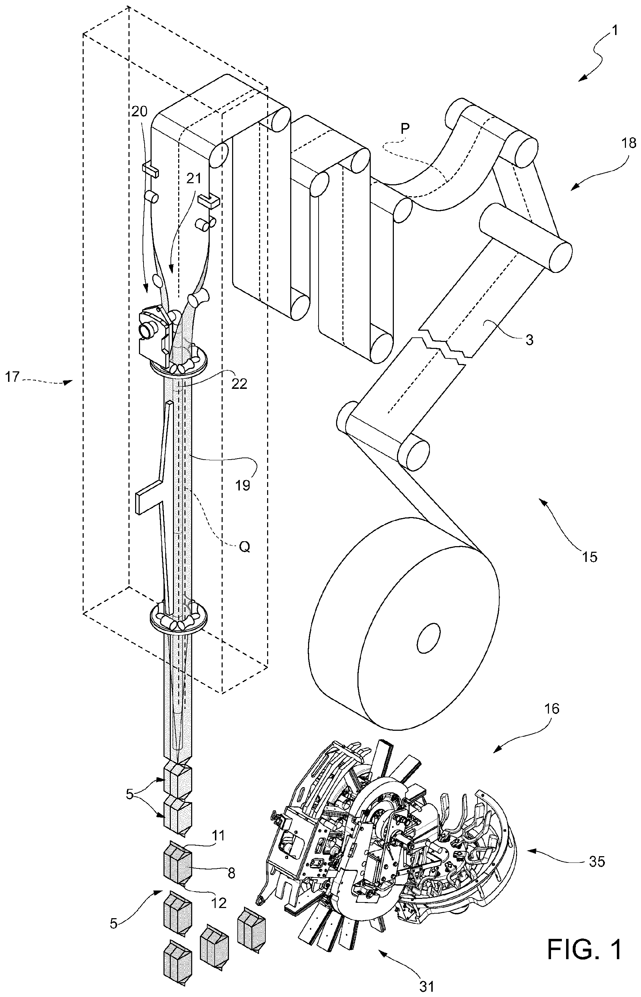

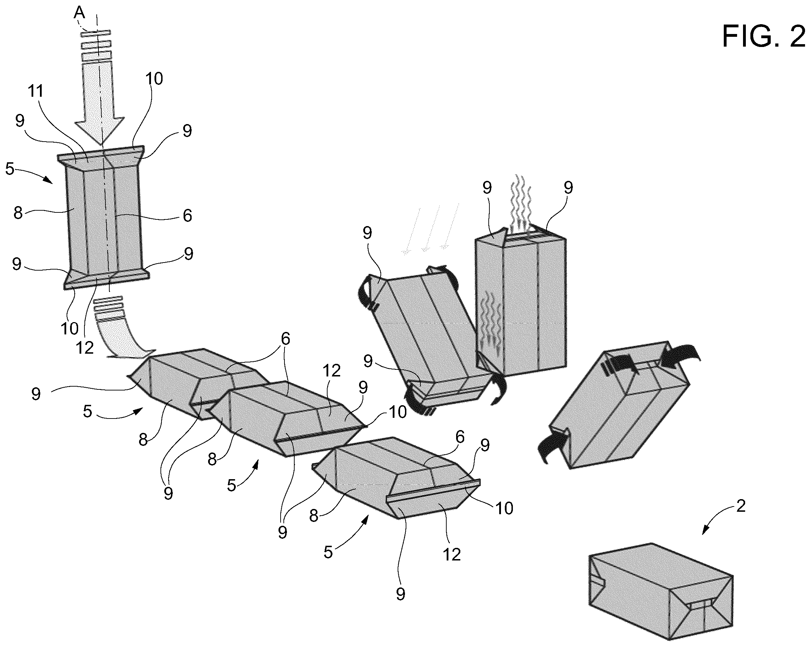

With particular reference to Figures 1 and 2, packaging machine 1 may be configured to produce (sealed) semi-finalized packs 5, such as e.g. pillow packs, being filled with the pourable product and to further treat and/or manipulate and/or form semi-finalized packs 5 for obtaining finalized packages 2.

With particular reference to Figure 2, each semi-finalized pack 5 may extend along a respective longitudinal axis A, and preferentially may comprise a longitudinal sealing band 6 (extending along and/or being parallel to longitudinal axis A).

Each semi-finalized pack 5 may comprise a central main body 8, one or more flaps 9 protruding away, preferentially laterally protruding away, from the respective central main body 8 and one or more transversal sealing fins 10, preferentially transversal to longitudinal axis A.

In further detail, each sealing fin 10 and each flap 9 may be arranged at a respective end portion of the respective semi-finalized pack 5. In even further detail, each sealing fin 10 and each flap 9 may result from transversally sealing the respective semi-finalized pack 5.

Preferentially, each semi-finalized pack 5 may comprise at least two transversal sealing fins 10, preferentially transversal to longitudinal axis A, and two pairs of flaps 9, each pair being associated with one respective sealing fin 10.

More specifically, each pair of flaps 9 and the respective sealing fin 10 are arranged at a respective end portion of the respective semi-finalized pack 5.

Even more specifically, one pair of flaps 9 and the respective sealing fin 10 of each semi-finalized pack 5 are arranged at a first end portion 11 of the respective semi-finalized pack 5 and the other pair of flaps 9 and the respective sealing fin 10 of each semi-finalized pack 5 are arranged at a second end portion 12 of the respective semi-finalized pack 5 opposite to the respective first end portion 11.

Moreover, each sealing fin 10 may define a respective transversal sealing fin of the respective finalized package 2 (obtained from the respective semi-finalized pack 5).

Additionally, each sealing fin 10 may protrude from the respective central main body 8 along a direction parallel to the respective longitudinal axis A.

Each longitudinal sealing band 6 may define a corresponding longitudinal seam portion of the respective finalized package 2 (obtained from the respective semi-finalized pack 5).

With particular reference to Figure 2, each end portion, in particular each first end portion 11 and each second end portion 12, may taper from the respective central main body 8 to and/or into the respective sealing fin 10 and the respective flaps 9.

Preferentially, each flap 9 and the respective sealing fin 10 are connected to one another.

In further detail, each semi-finalized pack 5 may comprise the respective first end portion 11, the respective second end portion 12 and an intermediate portion interposed between first end portion 11 and second end portion 12.

With particular reference to Figure 1, packaging machine 1 may comprise at least:
- a forming apparatus 15 configured to form and/or obtain semi-finalized packs 5 of the pourable product, preferentially from the multilayer packaging material, even more preferentially from web of packaging material 3; and
- a folding apparatus 16 configured to receive the semi-finalized packs 5 from forming apparatus 15 and to form finalized packages 2 of the pourable product from semi-finalized packs 5.

In more detail, forming apparatus 15 may comprise:
- an isolation chamber 17 configured to separate an inner (sterile) environment from an outer (hostile) environment;
- a conveying device 18 configured to advance web of packaging material 3 along a web advancement path P at least to a tube forming station at which web of packaging material 3 is formed, in use, into a tube 19 and for advancing tube 19 along a tube advancement path Q;
- a tube forming and sealing device 20 at least partially arranged within isolation chamber 17 and configured to form and longitudinally seal tube 19 at the tube forming station within isolation chamber 17;
- a filling device 21 for filling tube 19 with the pourable product; and
- a pack forming unit configured to at least form and transversally seal tube 19, preferentially to also transversally cut tube 19, preferentially during advancement of tube 19 along tube advancement path Q, for obtaining and/or producing semi-finalized packs 5.

Preferentially, each sealing fin 10 may result from transversally sealing and cutting tube 19.

Preferentially, the pack forming unit may be arranged downstream of isolation chamber 17 and tube forming and sealing device 20 along tube advancement path Q.

Moreover, tube 19 may extend along a longitudinal axis, preferentially having a vertical orientation.

Furthermore, packaging machine 1 may further comprise a sterilization apparatus for sterilizing at least a portion of web of packaging material 3 at a sterilization station arranged upstream of the tube forming station along web advancement path P.

In more detail, filling device 21 may comprise at least a filling pipe 22 being in fluid connection or being controllable to be in fluid connection with a pourable product storage tank (not shown and known as such) and being, in use, partially placed within tube 19 for feeding the pourable product into the, in use, advancing tube 19.

According to some preferred non-limiting embodiments, the pack forming unit may comprise:
- a plurality of pairs of at least one operative assembly (not shown and known as such) and at least one respective counter-operative assembly (not shown and known as such); and
- a conveying unit (not shown and known as such) configured to advance the operative assemblies and the respective counter-operative assemblies along respective conveying paths.

More specifically, each operative assembly may be configured to cooperate, in use, with the respective counter-operative assembly of the respective pair for forming, transversally sealing, and preferentially also transversally cutting, tube 19 for obtaining one respective semi-finalized pack 5, in particular when, in use, advancing along a respective operative portion of the respective conveying path.

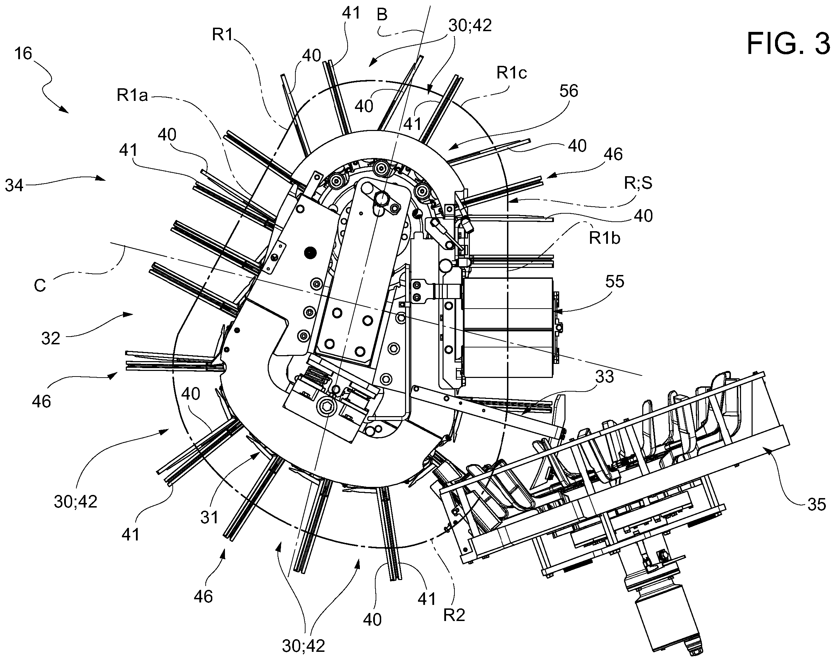

With particular reference to Figures 1 and 3, folding apparatus 16 is configured to form finalized packages 2 from the respective semi-finalized packs 5.

Advantageously, folding apparatus 16 is, more specifically also forming apparatus 15 is, arranged on and/or arrangeable on a support surface, in particular a horizontal support surface.

The support surface can be a floor of a production hall and/or a base structure placed within a production hall may comprise the support surface.

With particular reference to Figures 1 and 3, folding apparatus 16 comprises:
- a plurality of retaining pockets 30 configured to receive one respective semi-finalized pack 5 at a time; and
- a conveying device 31 configured to advance retaining pockets 30 along an endless path R and through a receiving station 32 at which each semi-finalized pack 5 is fed into one respective retaining pocket 30 and a release station 33 at which each finalized package 2 is released from the respective retaining pocket 30; and
- a manipulation assembly 34 configured to execute, in use, a plurality of manipulation steps on semi-finalized packs 5 advancing, in use, within the respective retaining pockets 30 and between receiving station 32 and release station 33 so as to form finalized packages 2 from semi-finalized packs 5.

More specifically, finalized packages 2 are formed from semi-finalized packs 5 by interaction of manipulation assembly 34 with semi-finalized packs 5 while semi-finalized packs 5 advance, in use, between receiving station 32 and release station 33 and through manipulation assembly 34.

In particular, in use, semi-finalized packs 5 advance together with the respective retaining pockets 30 from receiving station 32 to release station 33.

Additionally, folding apparatus 16 may also comprise an infeed conveyor configured to feed semi-finalized packs 5 to receiving station 32 and into retaining pockets 30. More specifically, the infeed conveyor may be configured to receive semi-finalized packs 5 from forming apparatus 15 and to feed semi-finalized packs 5 to receiving station 32.

More specifically, the infeed conveyor may be interposed between folding apparatus 16, in particular conveying device 31, and forming apparatus 15.

Moreover, folding apparatus 16 may also comprise an outfeed conveyor 35 configured to receive finalized packages 2 at release station 33, and more specifically being configured to advance finalized packages 2 along a further path and towards secondary packaging apparatuses such as palletizers, wrappers, or the like.

With particular reference to Figures 1 and 3, conveying device 31 is arranged such that endless path R comprises a main portion R1 extending between receiving station 32 and release station 33, in particular from receiving station 32 to release station 33. Thus, manipulation assembly 34 is configured to manipulate semi-finalized packs 5 during advancement of semi-finalized packs 5 along main portion R1.

Additionally, main portion R1 comprises a first operative section R1a, a second operative section R1b and a connecting section R1c, in particular a curved connecting section R1c, connecting first operative section R1a and second operative section R1b with one another.

More specifically, first operative section R1a may extend from receiving station 32 to connecting section R1c and second operative section R1b may extend from connecting section R1c to release station 33.

In particular, second operative section R1b is arranged downstream of first operative section R1a along endless path R.

Moreover, endless path R may also comprise a return portion R2, in particular a curved return portion R2, more specifically connecting second operative section R1b with first operative section R1a. In particular, in use, retaining pockets 30 are empty when moving along return portion R2 and are ready to receive a new semi-finalized pack 5.

In particular, return portion R2 extends from release station 33 to receiving station 32.

Preferentially, endless path R has an oval-like shape.

Preferentially but not necessarily, at least parts of first operative section R1a and of second operative section R1b have a rectilinear shape. More preferentially, first operative section R1a and second operative section R1b are rectilinear.

Advantageously, at the interface between first operative section R1a and connecting section R1c and at the interface between second operative section R1b and connecting section R1c there are changes in the curvature of endless path R.

In further detail, endless path R comprises a first axis B and a second axis C perpendicular to first axis B.

Preferentially, first axis B and second axis C extend along a non-horizontal direction (with folding apparatus 16 being arranged in a production hall and/or during operation of folding apparatus 16). This allows a compact design of folding apparatus 16.

In particular, endless path R encloses an area extending along first axis B and second axis C. Additionally, an extension of the area enclosed by endless path R along first axis B is larger than an extension of the area enclosed by endless path R along second axis C.

Advantageously, first axis B is inclined with respect to the support surface, i.e. first axis B is non-horizontal. Furthermore, first axis B is inclined with respect to a vertical direction. Moreover, second axis C is inclined with respect to the support surface, i.e. second axis C is non-horizontal. Furthermore, second axis C is inclined with respect to a vertical direction.

In further detail, first operative section R1a and second operative section R1b are inclined with respect to the support surface and/or extend along a non-horizontal direction and/or extend along first axis B and/or are parallel to first axis B. Such an arrangement allows a compact design of folding apparatus 16.

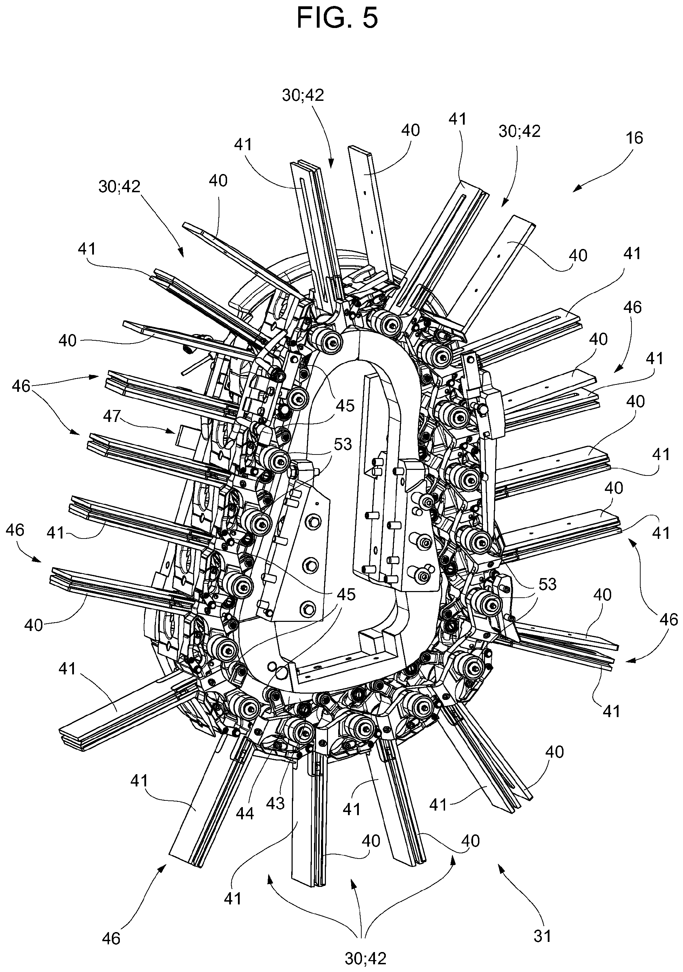

With particular reference to Figures 1 and 3 to 5, each retaining pocket 30 comprises a first plate 40 and a second plate 41 delimiting a retaining space 42 of the respective retaining pocket 30.

In particular, in use, semi-finalized packs 5 and/or finalized packages 2 are positioned within the respective retaining spaces 42 during advancement between receiving station 32 and release station 33.

Moreover, each first plate 40 and the respective second plate 41 delimit the respective retaining space 42 between one another.

Advantageously, first plates 40 and second plates 41 are coupled to conveying device 31.

Moreover, conveying device 31 is configured to advance first plates 40 and second plates 41 along endless path R so as to advance retaining pockets 30 (and therewith also retaining spaces 42) along endless path R.

At least one of the respective first plate 40 and the respective second plate 41 of each retaining pocket 30 is movable with respect to conveying device 31 and designed to modify a distance between the respective first plate 40 and the respective second plate 41, in particular during advancement of the respective first plate 40 and the respective second plate 41 along endless path R.

Advantageously, each first plate 40 is arranged downstream of the respective second plate 41 of the respective retaining pocket 30 along endless path R.

Advantageously, the distance between the respective first plate 40 and the respective second plate 41 of the respective retaining pocket 30 depends on the respective positions of the respective first plate 40 and the respective second plate 41 along endless path R. Thus, the distance between the respective first plate 40 and the respective second plate 41 is controlled in dependence of the respective position of the respective semi-finalized pack 5 during advancement between receiving station 32 and release station 33 or, in other words, in dependence of the respective position of the respective retaining pocket 30 along endless path R. In this way, it is possible to optimize the insertion of semi-finalized packs 5 into the respective retaining pockets 30, the advancement of semi-finalized packs 5 and the release of finalized packages 2 out of the respective retaining pockets 30.

It should be noted that movement of retaining pockets 30 along endless path R is defined by movement of the respective first plate 40 and the respective second plate 41 along endless path R. Additionally, movement of retaining pockets 30 along endless path R comes along with a change in the respective positions of retaining pockets 30, and of course also of the respective first plates 40 and the respective second plates 41, along endless path R. In dependence of the respective positions along endless path R, it is advantageous to control also the distance between the respective first plate 40 and the respective second plate 41. For example, it may be advantageous to allow a larger distance between the respective first plate 40 and the respective second plate 41 of the respective retaining pocket 30 when receiving or releasing, respectively, the respective semi-finalized pack 5 and the respective finalized package 2.

In further detail, each first plate 40 is angularly movable about a rotation axis E, in particular so as to relatively move with respect to the respective second plate 41 of the respective retaining pocket 30.

More specifically, folding apparatus 16 comprises a control mechanism 43 configured to control the distance between the respective first plate 40 and the respective second plate 41, preferentially in dependence of the respective positions of the respective first plate 40 and the respective second plate 41 along endless path R.

In particular, control mechanism 43 is configured to control a respective angular position of each first plate 40 with respect to the respective rotation axis E, preferentially in dependence of the position of each first plate 40 along endless path R.

Advantageously, folding apparatus 16, more specifically control mechanism 43, is configured such that the respective angular position of each first plate 40 with respect to the respective rotation axis E at receiving station 32 is such to facilitate insertion of semi-finalized packs 5 into retaining pockets 30, more particularly so as to gently handle semi-finalized packs 5.

Advantageously, folding apparatus 16, more specifically control mechanism 43, is configured such that the distance between the respective first plate 40 and the respective second plate 41 of the respective retaining pocket 30 decreases during advancement along a portion of endless path R downstream of receiving station 32 along endless path R. In particular, the distance between the respective first plate 40 and the respective second plate 41 of the respective retaining pocket 30 decreases during advancement along a portion of endless path R so as to clamp semi-finalized packs 5 between the respective first plates 40 and the respective second plates 41 after feeding of semi-finalized packs 5 into the respective retaining pockets 30.

Preferentially but not necessarily, control mechanism 43 is configured to move each first plate 40 towards the respective second plate 41 after insertion of the respective semi-finalized pack 5 into the respective retaining space 42 in order to clamp the respective semi-finalized pack 5 between the respective first plate 41 and the respective second plate 41.

Moreover, folding apparatus 16, more specifically control mechanism 43, is configured such that each first plate 40 is withdrawn from the respective second plate 41 of the respective retaining pocket 30 when advancing along return portion R2 and prior to reaching and/or when being at receiving station 32. In this way, it is possible to obtain a gentler insertion of semi-finalized packs 5 into retaining pockets 30.

In particular, conveying device 31 is configured to advance second plates 41 in a first advancement direction along endless path R. Moreover, folding apparatus 16, more specifically control mechanism 43, is configured such that each first plate 40 moves in a second advancement direction opposite to the first advancement direction prior to reaching and/or when being at receiving station 32. The Applicant has observed that in this way, one obtains an even gentler insertion of semi-finalized packs 5 into retaining pockets 30 as while conveying device 31 moves second plate 41 in the first advancement direction, the first plate 40 moves with respect to conveying device 31 in the second advancement direction and away from second plate 41.

Preferentially but not necessarily, control mechanism 43 is configured to withdraw each first plate 40 from the respective second plate 41 of the respective retaining pocket 30 (i.e.to move each first plate 40 away from the respective second plate 41 of the respective retaining pocket 30) upstream of release station 33 such to allow for removal of finalized packages 2 from the respective retaining pocket 30.

In more detail, folding apparatus 16, in particular control mechanism 43, comprises a cam mechanism 44 and a plurality of control elements 45 configured to interact with cam mechanism 45.

Preferentially, each control element 45 is coupled to one respective first plate 41 so as to control the distance between the respective first plate 40 and the respective second plate 41 by means of the interaction of control element 45 and cam mechanism 44.

More specifically, each control element 45 engages a control surface of cam mechanism 44 and runs along the control surface during advancement of the respective first plate 40 along endless path R.

In further detail, cam mechanism 44 comprises a first cam and a second cam arranged adjacent to one another. Additionally, a first plurality of control elements 45 engages the first cam and a second plurality of control elements 45 engages the second cam.

Moreover, each first plate 40 is coupled to one respective control element 45 of the first plurality and to one respective control element 45 of the second plurality.

With reference to Figures 3 to 7b, the respective first plate 40 of each retaining pocket 30 is associated with the respective second plate 41 of a respective neighboring retaining pocket 30.

In particular, each first plate 40 is arranged adjacent to the respective associated second plate 41 of the respective neighboring retaining pocket 30.

Additionally, each first plate 40 is movable with respect to the associated second plate 41 of the respective neighboring retaining pocket 30.

In particular, each first plate 40 is angularly movable about the respective rotation axis E such that it is possible to modify the distance between the respective first plate 40 and the respective associated second plate 41 of the neighboring retaining pocket 30.

In more detail, each first plate 40 is arranged upstream of the respective associated second plate 41 of the respective neighboring retaining pocket 30 along endless path R.

Advantageously, each first plate 40 and the respective associated second plate 41 of the respective neighboring retaining pocket 30 define a respective plate group 46.

A distance between the respective first plate 40 and the respective associated second plate 41 of the respective neighboring retaining pocket 30, i.e. a distance between each first plate 40 and the respective second plate 41 of the same plate group 46, depends on the positions of the respective first plate 40 and the respective associated second plate 41 of the respective neighboring retaining pocket 30 along endless path R. In particular, control mechanism 43 is configured to also control the distance between each first plate 40 and the respective associated second plate 41 of the respective neighboring retaining pocket 30 as a function of the respective positions of the respective first plate 40 and the respective associated second plate 41 of the respective neighboring retaining pocket 30 along endless path R.

In particular, this is advantageous, when semi-finalized packs 5 advance along connection section R1c. By modifying the distance between first plate 40 and the respective associated second plate 41 of the respective neighboring retaining pocket 30, i.e. the distance between first plate 40 and the respective second plate 41 of the same plate group 46, it is possible to ensure that each semi-finalized pack 5 continues to be clamped by the respective first plate 40 and the respective second plate 41 of the respective retaining pocket 30.

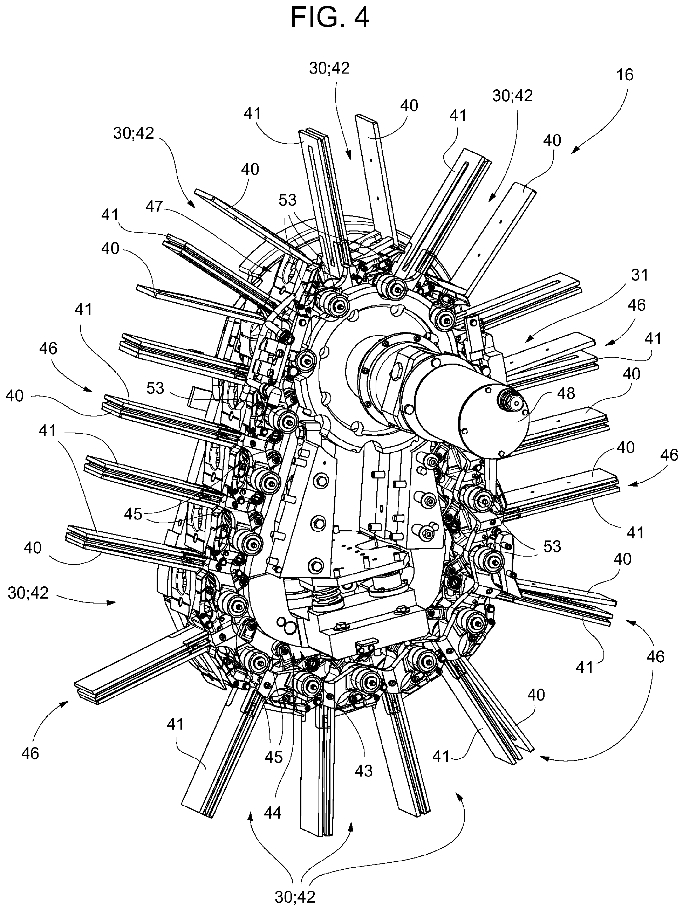

With particular reference to Figures 4 to 7B, conveying device 31 comprises a conveyor chain 47 carrying the plurality of first plates 40 and the plurality of second plates 41 and an actuation device 48 configured to advance conveyor chain 47 along an endless path S so as to advance retaining pockets 30 along endless path R.

Additionally, conveying device 31 comprises two gear wheels spaced apart from one another. Conveying chain 47 is arranged about the two gear wheels and actuation device 48 is connected to at least one gear wheel and is configured to acuate a rotation of the at least one gear wheel, thereby also actuating advancement of conveying chain 47.

The two gear wheels are aligned along first axis B. In other words, the two gear wheels are distanced from one another along first axis B.

In particular, each of the two gear wheels rotates about a respective horizontal axis. The horizontal axes are perpendicular to first axis B and are spaced apart from one another along first axis B.

In particular, each first plate 40 is hinged to conveyor chain 47, in particular such to be rotatable about the respective rotation axis E.

In more detail, conveyor chain 47 comprises a plurality of chain links 49, in particular connected to one another and forming together conveyor chain 47.

Each chain link 49 carries the respective first plate 40 of a retaining pocket 30 and the respective second plate 41 of a neighboring retaining pocket 42, i.e. the respective first plate 40 and the respective second plate 41 of the same plate group 46. Thus, each first plate 40 and the respective second plate 41 of the same plate group 46 are carried by the same chain link 49.

Additionally, each first plate 40 and the respective second plate 41 delimiting together the respective retaining space 43 are carried by two different chain links 49. In particular, the respective two different chain links 49 may be connected to one another.

Advantageously, each first plate 40 is angularly movably connected (about the respective rotation axis E) to the respective chain link 49.

In addition, each second plate 41 is fixed to the respective chain link 49.

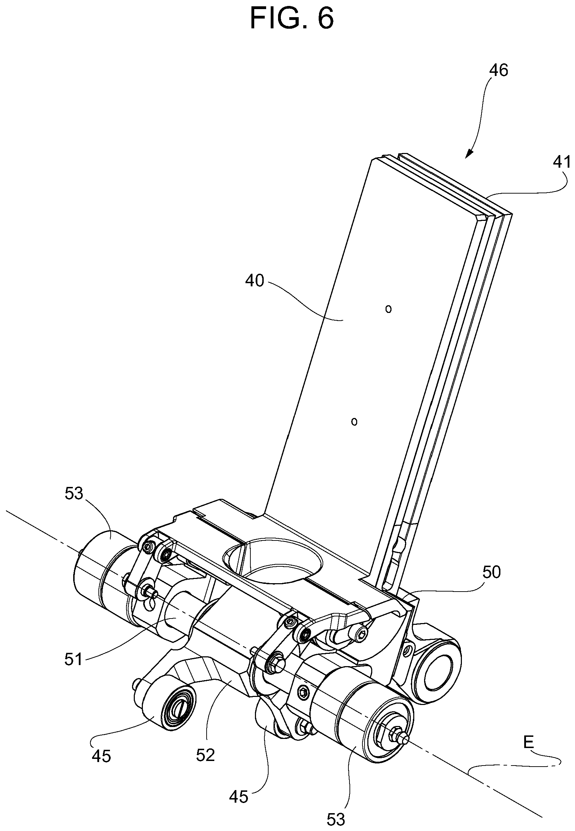

With particular reference to Figures 6 to 7B, each chain link 49 comprises a support 50 carrying the respective second plate 41 and an axle 51 angularly movably connected to support 50 and carrying the respective first plate 40. In particular, each axle 51 defines the respective rotation axis E.

In particular, each axle 51 extends through one or more through-holes, in the specific case shown two, of the respective support 50.

Additionally, each axle 51 also extends through one or more through-holes of a neighboring chain link 49.

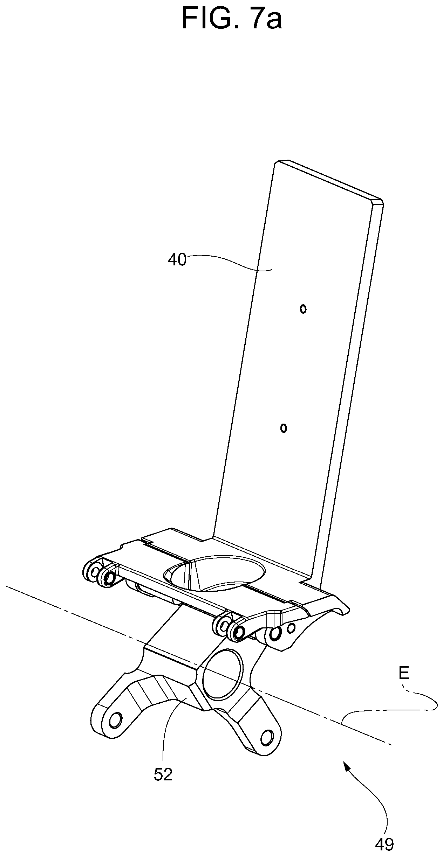

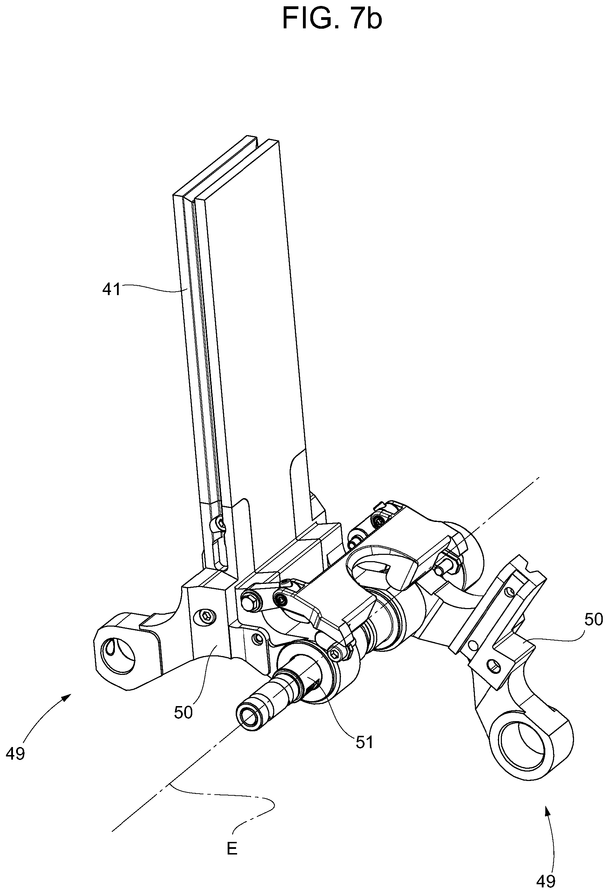

With particular reference to Figures 6 and 7A, each chain link 49 also comprises a respective carrier 52 coupled to the respective first plate 40 and mounted to the respective axle 51 and carrying at least one, in the specific case shown two, control elements 45.

With particular reference to Figures 4 to 6, each chain link 49 also comprises one or more support rollers 53 engaging an engagement surface (not shown) during advancement of retaining pockets 30 along endless path R.

With particular reference to Figures 1 and 3, manipulation assembly 34 is configured to manipulate semi-finalized packs 5 when, in use, advancing along first operative section R1a and when, in use, advancing along second operative section R1b.

Advantageously, manipulation assembly 34 is configured not to actively manipulate semi-finalized packs 5 when, in use, semi-finalized packs 5 advance along connection section R1c.

In further detail, a distance between the respective first plate 40 and the respective associated second plate 41 of the respective neighboring retaining pocket 30, i.e. a distance between the respective first plate 40 and the respective second plate 41 of the same plate group 46, is increased prior to the respective first plate 40 starting to advance along connection section R1c and is newly reduced when the respective first plate 40 advances along second operative section R1b.

More specifically, manipulation assembly 34 is configured to execute at least one manipulation step on semi-finalized packs 5 when, in use, semi-finalized packs 5 advance along first operative section R1a and to execute at least another manipulation step on semi-finalized packs 5 when, in use, semi-finalized packs 5 advance along second operative section R1b.

In further detail, manipulation assembly 34 comprises a plurality of manipulation devices, each one configured to execute, in use, at least one respective manipulation step on semi-finalized packs 5 at a respective manipulation station.

At least one manipulation station is arranged along first operative section R1a and at least one manipulation station is arranged along second operative section R1b.

In particular, manipulation assembly 34 comprises at least:
- one, more specifically at least two, even more specifically exactly two, folding devices, each one configured to partially fold respective sealing fins 10 of each semi-finalized pack 5 from a respective unfolded position in which each sealing fin 10 protrudes from the respective central main body 8 to a partially folded position in which the sealing fin 10 is folded towards and/or onto the respective central main body 8 and/or to partially fold each respective flap 9 of each semi-finalized pack 5 from a respective non-folded position in which each flap 9 protrudes away from the respective central main body 8 to a respective partially bent position in which the flap 9 is folded towards the respective central main body 8; and
- a bonding device 55 configured to bond flaps 9 onto the respective central main bodies 8.

More specifically, one folding device is configured to partially fold the respective pair of flaps 9 and/or the respective sealing fin 10 protruding from the respective first end portion 11 and the other folding device is configured to partially fold the respective pair of flaps 9 and/or the respective sealing fin 10 protruding from the respective second end portion 12.

Additionally, each folding device and bonding device 55 comprises a respective manipulation device, in particular being configured to manipulate semi-finalized packs 5 at a respective manipulation station.

With particular reference to Figures 1 and 3, each folding device is arranged such to partially fold the respective flaps 9 and/or the respective sealing fin 10 while the respective semi-finalized pack 5 advances, in use, along first operative section R1a.

Moreover, bonding device 55 is configured to bond flaps 9 onto the respective central main body 8 while the respective semi-finalized pack 5 advances, in use, along second operative section R1b.

Preferentially but not necessarily, folding apparatus 16 also comprises one or more retaining structures 56 at least partially arranged along connecting section R1c and configured to maintain flaps 9 and/or sealing fins 10 in, respectively, the respective partially bent position and the respective partially folded position during advancement of the respective semi-finalized pack 5 along connecting section R1c.

In particular, retaining structures 56 do not have any active manipulative role on semi-finalized packs 5 but a substantially passive role by maintaining the position of flaps 9 and/or sealing fins 10 as defined by the respective folding device.

It is then bonding device 55 which guarantees that flaps 9 are arranged in finally folded positions in which flaps 9 are attached to the intermediate portion of the respective finalized package 2 and/or sealing fins 10 are arranged in finally bent positions in which sealing fins 10 extend along the respective first end portion and/or the respective second end portion and/or the intermediate portion of the respective finalized package 2.

In more detail, bonding device 55 comprises a heating unit configured to heat flaps 9 and a pressing unit configured to press the heated flaps 9 onto the respective central main bodies 8.

In further detail, bonding device 55 comprises a first bonding portion configured to bond the respective flaps 9 protruding from the respective first end portion 11 of each semi-finalized pack 5 onto the respective central main body 8 and a second bonding portion configured to bond the respective flaps 9 protruding form the second end portion 12 of each semi-finalized pack 5 onto the respective central main body 8.

More specifically, the heating unit comprises first heating means being part of the first bonding portion of bonding device 55 and being configured to heat the flaps 9 of the respective first end portion 11 of each semi-finalized pack 5 and second heating means being part of the second bonding portion of bonding device 55 and being configured to heat the flaps 9 of the respective second end portion 12 of each semi-finalized pack 5.

Additionally, the pressing unit comprises a first pressing group being part of the first bonding portion of bonding device 55 and being configured to press flaps 9 of the respective first end portion 11 of each semi-finalized pack 5 onto the respective central main body 8 and a second pressing group being part of the second bonding portion of bonding device 55 and being configured to press the flaps 9 of the respective second end portion 12 of each semi-finalized pack 5 onto the respective central main body 8.

In particular, the first heating means, the second heating means, the first pressing group and the second pressing group are arranged along respective zones of second operative section R1b.

In use, packaging machine 1 forms finalized packages 2 filled with the pourable product.

In particular, the method for forming finalized packages 2 comprises the main steps of:
- forming semi-finalized packs 5, in particular by operation of forming apparatus 15; and
- folding semi-finalized packs 5 into finalized packages 2, in particular by operation of folding apparatus 16.

In more detail, the main step of forming semi-finalized packs 5, comprises at least the steps of:
- advancing web of packaging material 3 along advancement path P, in particular by operation of conveying device 18;
- folding web of packaging material 3 into tube 19, in particular within isolation chamber 17, in particular by operation of tube forming and sealing device 20;
- longitudinally sealing tube 19, in particular within isolation chamber 17, in particular by operation of tube forming and sealing device 20;
- filling tube 19 with the pourable product, in particular by operation of filling device 21, more in particular filing pipe 22;
- advancing tube 19 along tube advancement path Q, in particular by operation of conveying device 18 and/or the pack forming unit; and
- obtaining semi-finalized packs 5 from tube 19 by forming, transversally sealing and transversally cutting tube 19, in particular by operation of the pack forming unit, during advancement of tube 19 along tube advancement path Q.

Moreover, the step of forming may also comprise the step of sterilizing web of packaging material 3 at the sterilization station.

In more detail, the step of folding semi-finalized packs 5 comprises the sub-steps of:
- feeding semi-finalized packs 5 into retaining pockets 30 at receiving station 32;
- advancing retaining pockets 30 (by advancing the respective first plates 40 and second plates 41) along endless path R through receiving station 32 and release station 33, in particular by operation of conveying device 31, thereby advancing semi-finalized packs 5 along main portion R1; and
- manipulating semi-finalized packs 5 during advancement of semi-finalized packs 5 along first operative section R1a and second operative section R1b, in particular by operation of manipulation assembly 34.

In more detail, during the step of advancing, the distance between the respective first plate 40 and the respective second plate 41 varies in dependence of the respective positions of the respective first plate 40 and the respective second plate 41 along endless path R.

In particular, during the step of advancing, control mechanism 43 controls the distance between the respective first plate 40 and the respective second plate 41 of the respective retaining pocket 30 in dependence of the respective positions of the respective first plate 40 and the respective second plate 41 along endless path R.

Advantageously, during the step of advancing, each first plate 40 moves, in particular angularly moves, about the respective rotation axis E, with respect to the respective associated second plate 41 of the respective neighboring retaining pocket 30 and in dependence of the respective position of first plate 40 along endless path R.

Advantageously, during the step of advancing, control mechanism 43 controls the respective angular movement of each first plate 40 about the respective rotation axis E.

Advantageously, during the step of advancing and during advancement of the respective retaining pocket 30 along the portion of endless path R arranged between receiving station 32 and release station 33, the respective first plate 40 is moved such that the respective first plate 40 and the respective second plate 41 of the respective retaining pocket 30 clamp the respective semi-finalized pack 5 between one another.

During the sub-step of manipulating at least one manipulation step is executed on semi-finalized packs 5 when advancing along first operative section R1a and at least another manipulation step is executed on semi-finalized packs 5 when advancing along second operative section R1b.

In particular, during the sub-step of manipulating, flaps 9 and/or sealing fins 10 are partially folded by operation of the respective folding device while the respective semi-finalized packs 5 advance along first operative section R1a and flaps 9 are bond onto the respective central main bodies 8 during advancement of the respective semi-finalized packs 5 along second operative section R1b.

While semi-finalized packs 5 advance along connecting section R1c, flaps 9 and/or sealing fins 10 are maintained in, respectively, the respective partially bent position and the respective partially folded position.

The advantages of folding apparatus 16 according to the present invention will be clear from the foregoing description.

In particular, folding apparatus 16 allows an improved advancement of semi-finalized packs 5.

In particular, by having first plates 40 being movable with respect to the respective second plates 41, it is possible to guarantee the clamping of semi-finalized packs 5 also during advancement along connection section R1c.

Additionally, folding apparatus 16 allows an improved insertion of semi-finalized packs 5 into the respective retaining pockets 30. In particular, it is possible to dampen an impact of semi-finalized packs 5 due to the possibility of moving the respective first plates 40 with respect to the respective second plates 41. In more detail, feeding of semi-finalized packs 5 into retaining pockets 30 may cause a change of direction that, in turn, may lead to a bump. The possibility of having first plates 40 being movable with respect to the respective second plates 41 allows to mitigate the bump.

Clearly, changes may be made to folding apparatus 16 and/or packaging machine 1 as described herein without, however, departing from the scope of protection as defined in the accompanying claims.

## Claims

1. Folding apparatus (16) for forming finalized packages (2) from semi-finalized packs (5) filled with a pourable product;
the folding apparatus (16) comprises:
- a plurality of retaining pockets (30);
- a conveying device (31) configured to advance the retaining pockets (30) along an endless path (R) and through a receiving station (32) at which the semi-finalized packs (5) are fed into respective retaining pockets (30) and a release station (33) at which the finalized packages (2) are released;
- a manipulation assembly (34) configured to execute a plurality of manipulation steps on the semi-finalized packs (5) advancing, in use, within the retaining pockets (30) and between the receiving station (32) and the release station (33) so as to form the finalized packages (2) from the semi-finalized packs (5);
wherein each retaining pocket (30) comprises a first plate (40) and a second plate (41) delimiting a retaining space (42) between one another;
wherein at least one of the respective first plate (40) and the respective second plate (41) of each retaining pocket (30) is movable so as to modify a distance between the respective first plate (40) and the respective second plate (41) of the respective retaining pocket (30).

2. Folding apparatus according to claim 1, wherein each first plate (40) is movable with respect to the respective second plate (41);
wherein each first plate (40) is arranged downstream of the respective second plate (41) along the endless path (R).

3. Folding apparatus according to claim 1 or 2, wherein the distance between the respective first plate (40) and the respective second plate (41) of the respective retaining pocket (30) depends on respective positions of the respective first plate (40) and the respective second plate (41) along the endless path (R).

4. Folding apparatus according to any one of the preceding claims, wherein the conveying device (31) is configured to advance the second plates (41) in a first advancement direction along the endless path (R);
wherein the folding apparatus (16) is configured such that each first plate (40) moves in a second advancement direction opposite to the first advancement direction prior to reaching and/or when being at the receiving station (32).

5. Folding apparatus according to any one of the preceding claims, and further comprising a control mechanism (43) configured to control an angular movement of each first plate (40) about a rotation axis (E) in dependence of the respective position of the first plate (40) along the endless path (R).

6. Folding apparatus according to any one of the preceding claims, and further comprising a cam mechanism (44) and a plurality of control elements (45) configured to interact with the cam mechanism (44);
wherein each control element (45) is coupled to one respective first plate (40) so as to control the distance between the respective first plate (40) and the respective second plate (41) of the respective retaining pocket (30) by means of the interaction of the control element (45) and the cam mechanism (44).

7. Folding apparatus according to any one of the preceding claims, wherein the respective first plate (40) of each respective retaining pocket (30) is associated with the respective second plate (41) of a respective neighboring retaining pocket (30).

8. Folding apparatus according to claim 7, wherein each first plate (40) is movable with respect to the respective associated second plate (41) of the respective neighboring retaining pocket (30).

9. Folding apparatus according to claim 7 or 8, wherein each first plate (40) is arranged upstream of the respective associated second plate (41) of the respective neighboring retaining pocket (30) along the endless path (R).

10. Folding apparatus according to any one of claims 7 to 9, wherein each first plate (40) and the respective associated second plate (41) of the respective neighboring retaining pocket (30) define a respective plate group (46);
wherein a distance between the respective first plate (40) and the respective associated second plate (41) of the respective neighboring retaining pocket (30) depends on the respective positions of the respective first plate (40) and the respective associated second plate (41) along the endless path (R).

11. Folding apparatus according to claim 10, wherein the endless path (R) comprises a first portion (R1a), a second portion (R1c) and a curved connection portion (R1c) connecting the first portion (R1a) and the second portion (R1b) with one another;
wherein a distance between the respective first plates (40) and the respective associated second plates (41) of the respective neighboring retaining pocket 30 is increased prior to the respective first plate (40) starting to advance along the connection section (R1c) and/or is reduced when the respective first plate (40) advances along the second operative section (R1b).

12. Folding apparatus according to any one of the preceding claims, wherein the conveying device (31) comprises a conveyor chain (47) carrying the first plates (40) and the second plates (41) and an actuation device (48) configured to advance the conveyor chain (47) along an endless path so as to advance the retaining pockets (30) along the endless path (R).

13. Folding apparatus according to claim 12, wherein the conveyor chain (47) comprises a plurality of chain links (49);
wherein each chain link (49) carries the respective first plate (40) of a retaining pocket (30) and the respective second plate (41) of a neighboring retaining pocket (30).

14. Folding apparatus according to claim 13, wherein each chain link (49) comprises a support (50) carrying the respective second plate (50) and an axle (51) angularly movably connected to the support (50) and carrying the respective first plate (40).

15. Packaging machine (1) for producing finalized packages (2) of a pourable product comprising at least:
- a forming apparatus (15) configured to form semi-finalized packs (5) of the pourable product; and
- a folding apparatus (16) according to any one of the preceding claims for forming the finalized packages (2) from the semi-finalized packs (5).

16. Method for forming finalized packages (2) from semi-finalized packs (5) filled with a pourable product;
the method comprising the steps of:
- feeding the semi-finalized packs (5) into retaining pockets (30) at a receiving station (32), each retaining pocket (30) being delimited by one respective first plate (40) and one respective second plate (41);
- advancing the retaining pockets (30) along an endless path (R) and through the receiving station (32) at which the semi-finalized packs (5) are fed into the retaining pockets (30) so as to advance together with the retaining pockets (30) and a release station (33) at which the respective finalized package (2) are released;
- manipulating the semi-finalized packs (5) during advancement of the semi-finalized packs (5) along the endless path (R) so as to form the finalized packages (2) from the semi-finalized packs (5);
wherein during the step of advancing, there is provided a step of moving at least one of the respective first plate (40) and the respective second plate (41) of each retaining pocket (30) so as to modify a distance between the respective first plate (40) and the respective second plate (41) of the respective retaining pocket (30).
